# EUROPÄISCHE PATENTSCHRIFT

(11) **EP 2 604 576 B1**
(45) Veröffentlichungstag und Bekanntmachung des Hinweises auf die Patenterteilung: **09.03.2016**
(21) Anmeldenummer: 11009764.9
(22) Anmeldetag: 12.12.2011
(51) Int. Cl.: C01B 25/45, H01M 4/58, H01M 4/62

(54) **VERFAHREN ZUR HERSTELLUNG VON LITHIUM-METALLPHOSPHAT**
METHOD FOR PRODUCING LITHIUM METAL PHOSPHATE
PROCÉDÉ DE FABRICATION DE LITHIUM-MÉTAL-PHOSPHATE

(43) Veröffentlichungstag der Anmeldung: 19.06.2013
(73) Patentinhaber: BK Giulini GmbH, 67065 Ludwigshafen/Rhein (DE)
(72) Erfinder: Staffel, Thomas, Dr., 67269 Grünstadt (DE); Weber, Siegbert, 68526 Ladenburg (DE); Fleischhauer, Marina, 76669 Langenbrücken (DE); Metzger, Sebastian, 70197 Stuttgart (DE)
(74) Vertreter: Wagner, Jutta

(56) Entgegenhaltungen:
- EP-A2- 1 195 838
- DE-A1- 10 353 266
- BING HUANG ET AL: "Synthesis and rate performance of lithium vanadium phosphate as cathode material for Li-ion batteries", JOURNAL OF ALLOYS AND COMPOUNDS, ELSEVIER SEQUOIA, LAUSANNE, CH, Bd. 509, Nr. 14, 20. Januar 2011 (2011-01-20), Seiten 4765-4768, XP028174274, ISSN: 0925-8388, DOI: 10.1016/J.JALLCOM.2011.01.151 [gefunden am 2011-02-03]

## Beschreibung

Die vorliegende Erfindung betrifft ein Verfahren zum Herstellen von Lithium-Metallphosphat, welches zur Verwendung als Kathodenmaterial in Batterien, insbesondere Sekundärbatterien geeignet ist.

Lithium-Metallphosphat-Verbindungen, die als Elektrodenmaterialien verwendet werden, sind an sich bekannt. Sie können auch mit Kohlenstoff dotiert bzw. beschichtet sein. Sie werden vor allem als Elektrodenmaterial in wiederaufladbaren sog. Sekundärbatterien verwendet.

Aus der DE 69731382 T2 ist ein Kathodenmaterial für sekundäre Lithiumbatterien bekannt. Dort wird ein LiMePO₄ mit einer geordneten Olivinstruktur offenbart, wobei Me für Eisen, Mangan, Nickel und Titan oder Gemische davon stehen kann.

Aus CA 2,307,119 A1 ist der Einbau von leitfähigem Kohlenstoff in derartige Elektrodenmaterialien bekannt.

Die US 2008/0187838 A1 offenbart Lithiumpolyacrylate als Bindemittel in Elektroden, die für die Herstellung von wiederaufladbaren Batterien benötigt werden.

Lithiumpolyacrylat ist ein an sich bekanntes Material der Formel (C₃H₄O₂)ₓ x Li. Es kann als klare Flüssigkeit mit einem pH-Wert zwischen 8 und 9 und einer Dichte von ca. 1,25 g/ml auf dem Markt bezogen werden. Lithiumpolyacrylat wird im Stand der Technik, siehe EP 2 199 348 A1, bereits als Dispergiermittel in der Mineralstoffindustrie verwendet.

Die aus der US 2008/0187838 bekannten, unter Verwendung von Lithiumpolyacrylat erhaltenden Elektroden weisen eine höhere Lebensdauer in Bezug auf ihre Wiederaufladbarkeit auf. Die Kathoden oder Anoden können ferner weitere Additive, wie z. B. Kohlenstoff-Partikel enthalten, die die Leitfähigkeit der Elektrode erhöhen. Lithiumpoylacrylat wird in der US 2008/0187838 A1 ausschließlich als Bindemittel beschrieben.

Ferner ist aus der DE 103 53 266 A1 ein Verfahren zur Herstellung einer Verbindung LiMPO₄, mit Fe, Mn, Co und/oder Ni als M, bekannt, wobei das Lithiumeisenphosphat eine sehr kleine Teilchengröße und enge Teilchengrößenverteilung hat. Das beschriebene Verfahren umfasst das Herstellen einer Precursormischung aus einer Li⁺-Quelle, einer M²⁺-QueHe und einer PO₄³⁻-Quelle, um eine Precursorsuspension herzustellen. Es folgt eine Dispergier- oder Mahlbehandlung der Precursorsuspension, bis der D₉₀-Wert der Teilchen in der Precursorsuspension weniger als 50 µm beträgt. Aus der gemahlenen Precursorsuspension wird LiMPO₄, vorzugsweise durch Umsetzung unter hydrothermalen Bedingungen, gewonnen.

Die dort offenbarte Precursorsuspension ist hochviskos und nur schwer misch- und rührbar. Ferner müssen gemäß DE 103 53 266 A1 einheitliche, homogene Kristalle mit einer sehr engen Partikelgrößenverteilung hergestellt werden. Die D₉₀ Werte sollen bevorzugt bei 10 bis 15 µm liegen, was durch die Dispergierung in einem Ultraturrax Rührer erreicht wurde. Die recht aufwändige Reaktionsführung und das notwendige einzelne Auflösen der Edukte für die Precursormischung und Dispergierung des Fällungs- bzw. Endprodukt sind bisher nicht gelöste Nachteile dieses Verfahrens.

Ausgehend von diesem Stand der Technik ergibt sich die Aufgabe, ein vereinfachtes, ökonomischeres Verfahrens zur Herstellung von Lithium-Metallphosphaten mit einer sehr homogenen Teilchengrößenverteilung bereit zu stellen. Die resultierende Lithium-Metallphosphate sollen für die Anwendung als Batteriematerial geeignet sein und sollen keine zusätzlichen Verunreinigungen durch Fremdionen aufweisen.

Diese Aufgabe wird mit dem Verfahren mit den Merkmalen des Anspruchs 1 gelöst. Weiterbildungen des Verfahrens sind in den Unteransprüchen ausgeführt.

Das erfindungsgemäße Verfahren zum Herstellen eines Lithium-Metallphosphat-Elektrodenmaterials umfasst die Schritte:
- Bereitstellung einer Trockenmischung enthaltend eine Lithiumverbindung, eine Metallverbindung, wobei das Metall ausgewählt ist unter Fe, Mn und Gemischen davon, und einem Phosphat,
- Umsetzen der Trockenmischung zu LiMPO₄,
- Nassmahlen des LiMPO₄ unter Zugabe von Wasser und Lithiumpolyacrylat,
- Trocknen.

Es wurde überraschend gefunden, dass sich durch Zugabe des Lithiumpolyacrylats die Viskosität deutlich erniedrigen lässt, so dass sich die Mahlbarkeit des LiMPO₄ entscheidend verbessert: Je niedriger die Viskosität, desto einfacher und ökonomischer ist die Mahlung bzw. desto feiner sind die erhaltenen Partikel.

Im Gegensatz zu den Ausführungen in DE 103 53 366 ist es nicht notwendig, die Mahlung auf Feinheiten von D₉₀ unter 50 µm an einer vor der Umsetzung zu LiMPO₄ vorliegenden Precursor-Suspension vorzunehmen. Durch die erfindungsgemäße Zugabe von Lithiumpolyacrylat lasst sich das LiMPO₄ in wässriger Suspension auf die gewünschte Feinheit vermahlen. Auch die in DE 103 53 366 für die Mahlung der Precursor-Suspension erforderlichen hohen Scherkräfte sind nicht notwendig.

Der erste Schritt des erfindungsgemäßen Verfahrens ist die Bereitstellung einer Trockenmischung, die Li⁺-, M²⁺- und PO₄³⁻- Ionen enthält. Die Trockenmischung kann in einfacher Weise durch Zugabe der Edukte in eine Mischvorrichtung erhalten werden. An die Mischvorrichtung sind keine besonderen Anforderungen zu stellen. Vorzugsweise kann die Vermischung direkt in der Vorrichtung zur Umsetzung der Trockenmischung erfolgen.

Als Lithiumverbindung wird Lithiumdihydrogenphopsphat bevorzugt, welches zugleich auch das benötigte Phosphat bereitstellt, so dass vorteilhaft kein weiteres Phosphat benötigt wird. Zudem liegen Li⁺ und PO₄³⁻ im optimalen stöchiometrischen Verhältnis vor. Die Lithiumverbindung sollte eine hohe Reaktivität bei der Trockenmahlung besitzen und vorzugsweise kostengünstig und einfach verfügbar sein. LiPO₃ wurde getestet, besitzt aber nur eine sehr geringe Reaktivität. Brauchbar sind LiOH, Li₂CO₃ und LiHCO₃.

Als Metallverbindung werden Mangancarbonat, Eisenoxalat und insbesondere Gemsiche von Mangancarbonat und Eisenoxalat bevorzugt. Als Eisenoxalat wird vorzugsweise das Dihydrat verwendet. Daneben kommen Hydroxide, Phosphate und reaktive Oxide in Betracht. Auch bei der Metallverbindung sind solche mit einer ausreichenden, besser noch hohen Reaktivität bei der Trockenmahlung, geringen Kosten und einfacher Verfügbarkeit bevorzugt.

Besonders bevorzugt wird ein Gemisch von Mangancarbonat und Eisenoxalat im Molverhältnis von 6:1 bis 2:1, insbesondere von 5:1 bis 3:1 und ganz besonders bevorzugt von etwa 4:1.

Sofern das Phosphat nicht als Lithium- bzw. Metallverbindung oder durch diese nicht in ausreichender Menge eingebracht wird, benötigt man eine zusätzliche Phosphatquelle wie z.B. Phosphorsäure oder (NH₄)H2PO4 / (NH4)2HPO4. Erfolgt die Zugabe beispielsweise als Meta- oder Ortho-Phosphorsäure, Pyrophosphorsäure, Polyphosphorsäure, oder vorzugsweise als Phosphat, Hydrogenphosphat oder Dihydrogenphosphat geeigneter Kationen. Als Kation ist in diesem Fall (neben Lithium bzw. Eisen und/oder Mangan) Ammonium bevorzugt. Dann muss der pH-Wert berücksichtigt werden und es entstehen Säuren oder Laugen als Nebenprodukte (Ammoniak, nicht umgesetzte H₃PO₄) die entfernt werden müssen oder dem Abwasser zugeführt werden. Es dürfen keine Fremdionen wie Na⁺/K⁺ (erniedrigung der Li⁺-Ionenbeweglichkeit) oder Halogenide (aggressiv gegenüber Zu- und Ableitungsrohre, bzw. Metallische Gefäße) in das System eingebracht werden. All dies würde die Kosten erhöhen und die Umwelt belasten.

Es hat sich bewährt, wenn das Molverhätlnis Li⁺ zu PO₄³⁻ im Bereich von 1,1 : 1 bis 1 : 1,1 liegt, vorzugsweise beträgt es etwa 1. Auch das Molverhältnis Li⁺ zu Metall²⁺ liegt bevorzugt im Bereich von 1,1 : 1 bis 1 : 1,1 liegt, vorzugsweise beträgt es ebenfalls etwa 1. Ganz besonders bevorzugt werden die Verbindungen LiH₂PO₄ : MnCO₃ : Fe-Oxalat im Molverhältnis von etwa 1 : 0,8 : 0,2 verwendet.

In einer bevorzugten Ausführungsform wird der Trockenmischung Kohlenstoff, vorzugsweise in Form von Ruß zugefügt. Die Menge beträgt von 1 bis 30 Gew.-% des Endproduktes, bevorzugt von 5 bis 20 Gew.-% und besonders bevorzugt etwa 10 Gew.-%.

Die Trockenmischung wird dann zu LiMPO₄ umgesetzt. Bevorzugt erfolgt die Umsetzung durch ein Vermahlen der Trockenmischung mit anschließendem Tempern.

Durch den Energieeintrag beim Vermahlen beginnt die Festkörperreaktion, welche zur Bildung von LiMPO₄ führt. Geeigneter Weise wird das Vermahlen in einer Planetenmonomühle mit Kugeln, z.B. mit ZrO₂-Kugeln, bevorzugt mit Kugeln, die einen Durchmesser im Bereich von 1,5 bis 3 mm, besonders bevorzugt von 2 mm Durchmesser aufweisen ausgeführt. Vorzugsweise erfolgt das Vermahlen in mehreren Mahlsequenzen, bei denen jeweils nach einer Zeit des Mahlens eine Pause eingehalten wird. Als geeignet haben sich 5 bis 15, vorzugsweise 6 bis 10 Mahlsequenzen erwiesen. Die Mahlsequenzenzahl kann auch höher oder niedriger gewählt werden. Die Mahldauer beträgt dabei typischerweise 10 bis 20 Minuten, vorzugsweise etwa 15 Minuten, die Pausen etwa 5 Minuten. Sowohl die Pausen als auch die Mahldauer können auch um einige Minuten ausgedehnt oder verkürzt werden. Auf die in dieser Mahlung erreichte Partikelgröße oder Partikelgrößenverteilung kommt es nicht an.

Anschließend erfolgt ein Tempern bei einer Temperatur im Bereich von 250 °C bis 500 °C, bevorzugt bei etwa 300 °C. Typischerweise wird über eine Zeitdauer im Bereich von 5 bis 15 Stunden, bevorzugt von etwa 10 Stunden getempert. Das Tempern erfolgt unter Schutzgasatmosphäre, besonders bevorzugt unter N₂ und/ oder H₂-Schutzgasatmosphäre.

Die gewünschte endgültige Partikelgröße und Partikelgrößenverteilung des LiMPO₄ wird durch eine Nassmahlung unter Zugabe von Lithiumpolyacrylat erhalten. Die Nassmahlung kann ebenso wie die zur Umsetzung erfolgende Mahlung in einer Planetenmonomühle erfolgen. In einer bevorzugten Variante erfolgt das gesamte Verfahren in ein und demselben Mahlbehälter. Als Flüssigkeit wird üblicherweise Wasser verwendet. Aufgrund der Lithiumpolyacrylatzugabe reichen etwa 5 bis 6 ml Wasser pro g LiMPO₄ um eine zur Mahlung geeignete Suspension zu erhalten. Es wird ferner vorgeschlagen, das Nassmahlen in einem Mahlbecher mit Kugeln, die vorzugsweise einen Durchmesser im Bereich von 0,3 bis 0,7 mm, bevorzugt von 0,5 mm aufweisen, durchzuführen. Sowohl der Becher als auch die Kugeln sind vorzugsweise aus ZrO₂. Es hat sich außerdem bewährt, die Nassmahlung über eine Zeitdauer von 20 Mintuen bis 1,5 Stunden, vorzugsweise von 30 Mintuen bis 1 Stunde, bei 500 bis 800 U/min, vorzugsweise bei etwa 650 U/min, und bei einer Temperatur im Bereich von 25 bis 40 °C auszuführen. Durch das Lithiumpolyacrylat ergibt sich eine Viskosität der Suspension im Bereich von 3500 - 7500 Pa s bei einer Scherrate von 0,1 s⁻¹.

Die Nassmahlung wird üblicherweise so durchgeführt, dass die Partikelgröße im Bereich von 0,1 bis15 µm, insbesondere von 0,1 bis 0,8 µm liegt. Die Partikelgröße D₉₀ des LiMPO₄ sollte kleiner 50 µm, bevorzugt kleiner 15 µm sein. Die durchschnittliche Partikelgröße D₅₀ beträgt vorzugsweise 0,4 bis 0,6 µm. Die Partikelgröße D₁₀ ist bevorzugt größer 0,05 µm, besonders bevorzugt größer als 0,1 µm. Alle Messungen von Partikelgrößen erfolgten im Rahmen der vorliegenden Erfindung mit einem Mastersizer 2000 (Firma Malvern).

Ferner liegt die Menge an Lithiumpolyacrylat vorzugsweise im Bereich von 0,005 bis 2,0 Gew.-%, insbesondere im Bereich von 0,05 bis 1 Gew.-%, bezogen auf die Gesamtmenge des Lithium-Metall-Phosphats.

Es ist von Vorteil, dass die Abtrenung des gemahlenen LiMPO₄ von bei der Nassmahlung eingesetzten Mahlkörpern, z.B. den Kugeln, trotz der verringerten Flüssigkeitsmenge bei der Mahlung weniger Flüssigkeit erfordert als bei einer Mahlung ohne Lithiumpolyacrylat. Dadurch ist auch der Feststoffgehalt der Suspension nach der Nassmahlung höher, wodurch sich eine Einsparung an Energie und eine Schonung bei der anschließenden Trocknung ergeben. Auch die Umwelt wird geschont, da weniger Abwasser entsteht und weniger Energie verbraucht wird. Es konnten erfindungsgemäß über 60 % Waschwassser eingespart werden und Feststoffgehalte von 20 bis 60 % erhalten werden. Die Abtrennung von z.B. ZrO₂-Kugeln kann vorteilhaft mittels eines Schüttelsiebs und Waschen mit Wasser erfolgen.

Die Trocknung kann vorzugsweise durch Sprühtrocknen erfolgen. Andere Verfahren sind aber ebenso geeignet.

Das Lithium-Metallphosphat, das in dem erfindungsgemäßen Verfahren erhalten wird, entspricht vorzugsweise der Formel Li(MnₓFe₁₋ₓ)PO₄, mit x von 0,9 bis 0,7, vorzugsweise ist x etwa 0,8. Außerdem ist es bevorzugt, wenn 1 bis 30 Gew.-%, vorzugsweise 8 - 10 Gew.-% Kohlenstoff bezogen auf das Gesamtgewicht des Lithium-Metallphosphates enthalten sind.

Die Erfindung soll anhand des folgenden Beispiels erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Trockenmischung

Zielprodukt ist Li(Mn_{0,8}Fe_{0,2})[PO₄] als Kathodenmaterial für Lithium-Ionen Batterien. Als Edukte kamen LiH₂PO₄ 11,95g, MnCO₃ 9,20g, Fe(C₂O₄)*2H₂O 3,60g sowie "carbon Black 1,531g", also Ruß, zum Einsatz. Die Edukte wurden nach dem Abwiegen in trockenem Zustand in dem Mahlbecher einer Planetenmonomühle Pulverisette 6 classic line (Firma Fritsch) zu einer Trockenmischung vermischt.

### Mahlen

Es folgte eine Mahlung der Trockenmischung mit Hilfe der Planetenmonomühle mit ZrO₂-Kugeln von 2 mm Durchmesser bei 650 U/min. Dabei stieg die Temperatur durch die Reibungswärme auf etwa 110°C.

Es wurde zunächst 15 Minuten gemahlen, danach folgten 5 Minuten Pause. Danach wurde mit geänderter Drehrichtung wieder 15 Minuten gemahlen und 5 Minuten Pause angeschlossen. Diese vier Aktionen wurden 4 Mal wiederholt (das sind 8 Mahlsequenzen), so dass die gesamte Dauer 160 Minuten betrug. Nach dem ersten Mahlvorgang wurde der Feststoff von Deckel und Wand des Mahlbechers geschabt, erneut hineingegeben und das Mahlprogramm mit der Dauer von 160 Minuten wiederholt. Während des Mahlens setzt die Festkörperreaktion der Edukte LiH₂PO₄ + MnCO₃ + Fe(C₂O₄) zu Li(Mn_{0,8}Fe_{0,2})[PO₄] ein. Die Partikelgröße lag bei 200nm bis 50 µm und war sehr unterschiedlich und uneinheitlich.

### Tempern

Es folgte ein Tempern der gemahlenen Trockenmischung unter N₂+H₂ Schutzgasatmosphäre. Dazu wurde die Trockenmischung durch Sieben in einer "Vibration-Siebmaschine ANALYSETTE 3 pro" (Firma Fritsch) von den Mahlkugeln getrennt und in Korund (Al₂O₃) - Schiffchen für eine Zeitdauer von etwa 10 Stunden in einen mit Stickstoff als Schutzgas durchströmten Röhrenofen eingebracht. Die Temperatur des Röhrenofens betrug etwa 300 °C. Man erhielt Li(Mn_{0,8}Fe_{0,2})[PO₄] mit einem Gehalt von etwa 9 Gew.-% C als schwarzen Feststoff.

### Nassmahlen

27 bzw. 18 g des beim Tempern entstandenen schwarzen Feststoffs wurden mit 150 bzw. 100 ml Wasser, 150 g ZrO₂-Kugeln (0,5 mm Durchmesser) und 0,5 Gew.-% flüssigem Lithiumpolyacrylat (0,09 g) in einen 250 ml ZrO₂-Mahlbecher gegeben und eine Stunde lang bei 650 U/min und Raumtemperatur von 25 °C gemahlen. Nach dem Mahlvorgang wird das Produkt mit Hilfe eines Schüttelsiebes und Wasser von den Kugeln getrennt. Es wurden 1 Liter Wasser zur Abtrennung des Produktes von den Mahlkugeln benötigt. Der Feststoffgehalt während des Mahlvorgangs betrug 18 %.

Der Zusatz von Lithiumpolyacrylat bewirkt unerwartet und vorteilhaft eine Verflüssigung der Suspension und damit eine Viskositätserniedrigung, so dass sich die kleinen ZrO₂-Kugeln (0,5 mm) darin schneller bewegen können. Hierdurch übertragen sie mehr Stoßenergie auf die Partikel, wodurch eine bessere Zerkleinerung erzielt wird. Zudem ist das Produkt keinen anderen Alkalimetall-Ionen als Lithium-Ionen ausgesetzt, so dass sich eine geeignete Produktreinheit ergibt. Auch lässt sich das Produkt mit weniger Wasserverbrauch von den Mahlkugeln trennen.

### Trocknen

Die entstandene Suspension wurde unter folgenden Bedingungen sprühgetrocknet:
Spülgas: 1000 I/h (50 mm Höhe)
Einlasstemperatur: 200 °C
Aspirator: 35 m³/h (90 %)
Peristaltikpumpe: 12 ml/min (40 %)
Düsenreinigung: 2
Als Endprodukt wurde ein schwarzer Feststoff, der die Zusammensetzung Li(Mn0,8Fe0,2)[PO4] mit einem Gehalt von 8 Gew.-% Kohlenstoff aufweist, erhalten.

### Vergleichsbeispiel ohne Lithiumpolyacrylat

Eine Trockenmischung wurde aus den gleichen Edukten wie vorher bereitgestellt, gemahlen und getempert. Die Nassmahlung erfolgte jedoch ohne Lithiumpolyacrylat, indem a) 18 g Feststoff + 150 ml H₂O bzw. b) 12 g Feststoff + 100 ml H₂O unter den gleichen Bedingungen wie oben der Nassmahlung unterworfen wurden. Das Abtrennen des Produktes von den Mahlkugeln benötigt jeweils 3 Liter Wasser.

Im Vergleich damit ergaben sich in dem erfindungsgemäßen Beispiel mit Lithiumpolyacrylat etwa 50 % mehr Feststoff pro Charge und der Wasserverbrauch beim Auswaschen war um 66 % verringert.

### Rheologische Messungen

Das Produkt der Temperung wurde mit und ohne Lithiumpolyacrylat mit Wasser zu den folgenden Suspensionen vermischt.

### Suspension 1:

| | |
|---|---|
| Li(Mn_{0,8} Fe_{0,2})[PO₄] / C 20 % | 3,20 g |
| E - Wasser | 3,00 g |
| Lithiumpolyacrylat | 0,03 g |
| Feststoffgehalt | 51,36% |
| Lithiumpolyacrylat bez. auf Feststoff | 0,94% |

### Supension 2:

| | |
|---|---|
| Li(Mn_{0,8} Fe_{0,2})[PO₄] / C 20 % | 3,20 g |
| E - Wasser | 3,00 g |
| Lithiumpolyacrylat | 0,0156 g |
| Feststoffgehalts | 51,48 % |
| Lithiumpolyacrylat bez. auf Feststoff | 0,49 % |

### Suspension 3:

| | |
|---|---|
| Li(Mn_{0,8} Fe_{0,2})[PO₄] / C 20 % | 3,20 g |
| E - Wasser | 3,00 g |
| Lithiumpolyacrylat | 0,00 |
| Feststoffgehalt | 51,48 % |
| Lithiumpolyacrylat bez. auf Feststoff | 0,0 % |

Direkt nach der Herstellung wurden Viskositätskurven mit einem Rheometer Marke Physica MCR 101 bei einer Scherrate von 0,1 bis 1000 s⁻¹ aufgenommen. Die Viskositäten sind in Tabelle 1 aufgeführt.

**Tabelle 1:**

| | Suspension 1 | Suspension 2 | Suspension 3 |
|---|---|---|---|
| Scherrate [s⁻¹] | Viskosität [Pa·s] | Viskosität [Pa·s] | Viskosität [Pa·s] |
| 0,1 | 3.540 | 7.430 | 49.300 |
| 0,158 | 75,8 | 2.140 | 25.700 |
| 0,251 | 14 | 1.270 | 10.900 |
| 0,398 | 3,03 | 1.190 | 5.490 |
| 0,631 | 1,36 | 937 | 2.750 |
| 1 | 1,06 | 397 | 1.380 |
| 1,58 | 0,85 | 212 | 772 |
| 2,51 | 0,575 | 96,7 | 453 |
| 3,98 | 0,578 | 21,3 | 362 |
| 6,31 | 0,582 | 7,17 | 308 |
| 10 | 0,432 | 0,482 | 178 |
| 15,8 | 0,295 | 0,733 | 110 |
| 25,1 | 0,193 | 0,959 | 22,3 |
| 39,8 | 0,134 | 0,67 | 8,29 |
| 63,1 | 0,0696 | 0,0734 | 6 |
| 100 | 0,035 | 0,105 | 8,21 |
| 158 | 0,0678 | 0,549 | 1,33 |
| 251 | 0,123 | 0,816 | 1,5 |
| 398 | 0,0722 | 0,27 | 1,13 |
| 631 | 0,0651 | 0,54 | 0,647 |
| 1.000 | 0,0341 | 0,116 | 0,442 |

Die Suspensionen 1 und 2 mit Verwendung von Lithiumpolyacrylat zeigten eine deutlich verringerte Viskosität im Vergleich zu Suspension 3 ohne Zusatz von Lithiumpolyacrylat.

## Patentansprüche

1. Verfahren zum Herstellen von Lithium-Metallphosphat umfassend die Schritte:
- Bereitstellung einer Trockenmischung enthaltend eine Lithiumverbindung, eine Metallverbindung, wobei das Metall ausgewählt ist unter Fe, Mn und Gemischen davon, und ein Phosphat,
- Umsetzen der Trockenmischung zu LiMPO₄,
- Nassmahlen des LiMPO₄ unter Zugabe von Wasser und Lithiumpolyacrylat,
- Trocknen,
wobei das Umsetzen durch ein Mahlen der Trockenmischung und ein Tempern der gemahlenen Trockenmischung erfolgt.

2. Verfahren gemäß Anspruch 1, **dadurch gekennzeichnet, dass** als Lithiumverbindung Lithiumdihydrogenphosphat verwendet wird.

3. Verfahren gemäß Anspruch 1 oder 2, **dadurch gekennzeichnet, dass** als Metallverbindung Mangancarbonat, Eisenoxalat oder ein Gemsich von Mangancarbonat und Eisenoxalat verwendet wird.

4. Verfahren gemäß einem der Ansprüche 1 bis 3, **dadurch gekennzeichnet, dass** in der Trockenmischung partikulärer Kohlenstoff, vorzugsweise Ruß zugefügt wird.

5. Verfahren gemäß einem der Ansprüche 1 bis 4, **dadurch gekennzeichnet, dass** das Mahlen der Trockenmischung in einer Planetenmonomühle mit ZrO₂-Kugel bevorzugt mit einem Durchmesser im Bereich von 1,5 bis 3 mm, besonders bevorzugt von 2 mm Durchmesser, durchgeführt wird.

6. Verfahren gemäß einem der Ansprüche 1 bis 5, **dadurch gekennzeichnet, dass** das Mahlen der Trockenmischung über zumindest 6 Mahlsequenzen erfolgt, wobei eine Mahlsequenz 12 bis 20 Minuten Mahldauer und eine Pause von etwa 5 Minuten umfasst.

7. Verfahren gemäß einem der Ansprüche 1 bis 6, **dadurch gekennzeichnet, dass** das Tempern der Trockenmischung unter Schutzgasatmosphäre, besonders bevorzugt unter N₂ und/ oder H₂-Schutzgasatmosphäre, bei einer Temperatur im Bereich von 250 °C bis 500 °C, bevorzugt bei 300 °C, und über eine Zeitdauer im Bereich von 5 bis 15 Stunden, bevorzugt von 10 Stunden, erfolgt.

8. Verfahren gemäß einem der Ansprüche 1 bis 7, **dadurch gekennzeichnet, dass** das Nassmahlen über eine Zeitdauer von 30 Minuten bis 1 Stunde bei etwa 650 U/min und bei einer Temperatur im Bereich von 25 bis 40 °C erfolgt.

9. Verfahren gemäß einem der Ansprüche 1 bis 8, **dadurch gekennzeichnet, dass** pro g zu LiMPO₄ umgesetzter Trockenmischung 5 bis 6 ml Wasser zugefügt werden.

10. Verfahren gemäß einem der Ansprüche 1 bis 9, **dadurch gekennzeichnet, dass** die Menge an Lithiumpolyacrylat im Bereich von 0,005 bis 2,0 Gew.-%, vorzugsweise im Bereich von 0,05 bis 1 Gew.-%, % bezogen auf die Gesamtmenge des Lithium-Metallphosphats beträgt.

11. Verfahren gemäß einem der Ansprüche 1 bis 10, **dadurch gekennzeichnet, dass** das LiMPO₄ nach der Nassmahlung mittels eines Schüttelsiebs und Wasser von den Mahlkörpern abgetrennt wird.

12. Verfahren gemäß einem der Ansprüche 1 bis 11, **dadurch gekennzeichnet, dass** das Trocknen als Sprühtrocknen ausgeführt wird.

13. Verfahren gemäß einem der Ansprüche 1 bis 12, wobei das Lithium-Metallphosphat die Formel Li(Mnₓ Fe₁₋ₓ)[PO₄], wobei x für eine Zahl im Bereich von 0,9 bis 0,7, bevorzugt für etwa 0,8 steht, aufweist.

14. Verfahren gemäß einem der Ansprüche 1 bis 13, wobei 1 bis 30 Gew.-%, vorzugsweise 5 bis 20 Gew.-% und insbesondere 8 bis 10 Gew.-% Kohlenstoff bezogen auf das Gewicht des Lithium-Metallphosphats enthalten sind.

## Claims

1. Method for the production of lithium metal phosphate, comprising the steps:
- providing a dry mixture containing a lithium compound, a metal compound, wherein the metal is selected from Fe, Mn and mixtures thereof, and a phosphate,
- converting the dry mixture to LiMPO₄,
- wet grinding the LiMPO₄ by adding water and lithium polyacrylate,
- drying,
wherein the conversion takes place by grinding the dry mixture and tempering the ground dry mixture.

2. Method according to claim 1, **characterised in that** lithium dihydrogen phosphate is used as the lithium compound.

3. Method according to claim 1 or 2, **characterised in that** manganese carbonate, iron oxalate or a mixture of manganese carbonate and iron oxalate is used as the metal compound.

4. Method according to anyone of claims 1 to 3, **characterised in that** particulate carbon, preferably soot, is added to the dry mixture.

5. Method according to anyone of claims 1 to 4, **characterised in that** the grinding of the dry mixture is carried out in a Planetary Mono Mill with ZrO₂ balls, preferably having a diameter ranging from 1.5 to 3mm, particularly preferred a diameter of 2mm.

6. Method according to anyone of claims 1 to 5, **characterised in that** the grinding of the dry mixture takes place over at least 6 grinding sequences, wherein one grinding sequence comprises 12 to 20 minutes of grinding duration and a pause of approximately 5 minutes.

7. Method according to anyone of claims 1 to 6, **characterised in that** the tempering of the dry mixture takes place in a protective gas atmosphere, particularly preferred in an N₂ and/or H₂ protective gas atmoshpere, at a temperature ranging from 250°C to 500°C, preferably at 300°C, and over a duration ranging from 5 to 15 hours, preferably of 10 hours.

8. Method according to anyone of claims 1 to 7, **characterised in that** the wet grinding takes place over a duration of 30 minutes to 1 hour at approximately 650 rpm and at a temperature ranging from 25 to 40°C.

9. Method according to anyone of claims 1 to 8, **characterised in that** 5 to 6ml of water is added per g to the converted dry mixture of LiMPO₄.

10. Method according to anyone of claims 1 to 9, **characterised in that** the amount of lithium polyacrylate ranges from 0.005 to 2.0% by weight, preferably from 0.05 to 1% by weight, relative to the total amount of the lithium metal phosphate.

11. Method according to anyone of claims 1 to 10, **characterised in that** the LiMPO₄ is separated from the grinding bodies after the wet grinding by means of a vibrating screen and water.

12. Method according to anyone of claims 1 to 11, **characterised in that** the drying is carried out as spray drying.

13. Method according to anyone of claims 1 to 12, wherein the lithium metal phosphate has the formula Li(Mnₓ Fe₁₋ₓ)[PO₄], wherein x stands for a number ranging from 0.9 to 0.7, and preferably stands for approximately 0.8.

14. Method according to anyone of claims 1 to 13, wherein 1 to 30% by weight, preferably 5 to 20% by weight and in particular 8 to 10% by weight of carbon, with respect to the weight of the lithium metal phosphate, is contained.

## Revendications

1. Procédé de production de phosphate métallique de lithium comprenant les étapes suivantes :
- préparation d'un mélange sec contenant un composé du lithium, un composé métallique, le métal étant choisi parmi Fe, Mn et des mélanges de ceux-ci, et un phosphate,
- conversion du mélange sec en LiMPO₄,
- broyage à l'état humide du LiMPO₄ sous ajout d'eau et de polyacrylate de lithium,
- séchage,
dans lequel la conversion s'effectue par un broyage du mélange sec et un recuit du mélange sec broyé.

2. Procédé selon la revendication 1, **caractérisé en ce qu'**en tant que composé du lithium, on utilise du dihydrogénophosphate de lithium.

3. Procédé selon la revendication 1 ou 2, **caractérisé en ce qu'**en tant que composé métallique, on utilise du carbonate de manganèse, de l'oxalate de fer ou un mélange de carbonate de manganèse et d'oxalate de fer.

4. Procédé selon l'une des revendications 1 à 3, **caractérisé en ce que** l'on ajoute dans le mélange sec du carbone particulaire, de préférence du noir de carbone.

5. Procédé selon l'une des revendications 1 à 4, **caractérisé en ce que** le broyage du mélange sec est mené dans un monobroyeur planétaire avec des billes de ZrO₂, de préférence d'un diamètre compris dans la gamme allant de 1,5 à 3 mm, de manière particulièrement préférée d'un diamètre de 2 mm.

6. Procédé selon l'une des revendications 1 à 5, **caractérisé en ce que** le broyage du mélange sec s'effectue par l'intermédiaire d'au moins 6 séquences de broyage, une séquence de broyage comprenant une durée de broyage de 12 à 20 minutes et une pause d'environ 5 minutes.

7. Procédé selon l'une des revendications 1 à 6, **caractérisé en ce que** le recuit du mélange sec s'effectue sous atmosphère gazeuse protectrice, de manière particulièrement préférée sous atmosphère gazeuse protectrice de N₂ et/ou de H₂, à une température comprise dans la gamme allant de 250 °C à 500 °C, de préférence à 300 °C, et sur une durée comprise dans la gamme allant de 5 à 15 heures, de préférence de 10 heures.

8. Procédé selon l'une des revendications 1 à 7, **caractérisé en ce que** le broyage à l'état humide s'effectue sur une durée allant de 30 minutes à 1 heure à environ 650 tours/min et à une température comprise dans la gamme allant de 25 à 40 °C.

9. Procédé selon l'une des revendications 1 à 8, **caractérisé en ce que** l'on ajoute de 5 à 6 mL d'eau par g de mélange sec converti en LiMPO₄.

10. Procédé selon l'une des revendications 1 à 9, **caractérisé en ce que** la quantité de polyacrylate de lithium s'inscrit dans la gamme allant de 0,005 à 2,0 % en poids, de préférence dans la gamme allant de 0,05 à 1 % en poids, le pourcentage étant rapporté à la quantité totale du phosphate métallique de lithium.

11. Procédé selon l'une des revendications 1 à 10, **caractérisé en ce que** l'on sépare le LiMPO₄ des corps de broyage au moyen d'un tamis vibrant et d'eau après le broyage à l'état humide.

12. Procédé selon l'une des revendications 1 à 11, **caractérisé en ce que** le séchage est mis en oeuvre sous la forme d'un séchage par pulvérisation.

13. Procédé selon l'une des revendications 1 à 12, dans lequel le phosphate métallique de lithium présente la formule Li(MnₓFe₁₋ₓ)[PO₄], dans laquelle x représente un nombre compris dans la gamme allant de 0,9 à 0,7, de préférence environ 0,8.

14. Procédé selon l'une des revendications 1 à 13, dans lequel sont contenus de 1 à 30 % en poids, de préférence de 5 à 20 % en poids et en particulier de 8 à 10 % en poids de carbone rapporté au poids du phosphate métallique de lithium.
